# EUROPÄISCHE PATENTSCHRIFT

(11) **EP 0 638 483 B1**
(45) Veröffentlichungstag und Bekanntmachung des Hinweises auf die Patenterteilung: **02.04.1997**
(21) Anmeldenummer: 94112252.5
(22) Anmeldetag: 05.08.1994
(51) Int. Cl.: B65D 30/00, B32B 5/26, A47C 31/10

(54) **Sackförmige Hülle für den Transportschutz von Möbeln und ähnlichen sperrigen Gütern**
Protective bag-like sleeve for furniture or other bulky goods during transport
Emballage en forme de sac, pour la protection des meubles ou objets volumineux similaires lors du transport

(30) Priorität: 12.08.1993 DE 9312026 U
(43) Veröffentlichungstag der Anmeldung: 15.02.1995
(73) Patentinhaber: BIO-PACK VERPACKUNGS GmbH & CO. KG, D-59557 Lippstadt (DE); NECKERMANN VERSAND AG, D-60386 Frankfurt (DE)
(72) Erfinder: Urbahn, Degenhard, D-59590 Geseke (DE); Krämer, Theo, D-63110 Rodgau (DE)

(56) Entgegenhaltungen:
- DE-U- 9 109 981
- DE-U- 9 115 015
- DE-U- 9 213 846

## Beschreibung

Die Erfindung bezieht sich auf eine sackförmige Hülle für den Transportschutz von Möbeln und ähnlichen sperrigen Gütern, bestehend aus einem unteren und einem sich daran anschließenden oberen Teil aus Textil.

Einfache sackförmige Hüllen geben den zu transportierenden Möbeln in dem unteren Bereich keinen ausreichenden Schutz. Längere Möbelstücke, die mit einer sackförmigen Hülle als Transportschutz umgeben sind, werden hochkant transportiert, so daß sie weniger Ladefläche einnehmen. Beim Verladen werden die derart verpackten Möbelstücke häufig über den Boden der Ladefläche geschoben, so daß der Schutz der unteren Gleitfläche, aber auch in dem unmittelbaren Bereich oberhalb der Gleitfläche, nicht ausreichend ist. Gerade in dem Bereich kurz oberhalb der Lade- und Gleitfläche sind die zu transportierenden Möbel gegen beschädigende Stöße gefährdet. Um diese Gefahr zu verringern oder gar ganz auszuschalten, schlägt die Erfindung vor, daß die sackförmige Hülle aus einem steiferen, mehrlagigen, wannenförmigen unteren Teil und einem weicheren, oberen Teil hergestellt ist, wobei die Außenschicht des wannenförmigen unteren Teils aus einem dickeren und gröberen Textil, die Innenschicht aus einem dünneren und feineren Textil, mindestens eine der mittleren Schichten aus einem Vlies und der obere Teil aus einem dünneren und feineren Textil besteht. Dadurch erhält der untere Teil der sackförmigen Hülle nicht nur eine bessere Polsterung, sondern dieser dient, nach Gebrauch und dem Zusammenlegen der sackförmigen Hülle, als Aufnahmeschale für den oberen, nur aus einem dünnen Textil bestehenden Teil.

Das DE-U-91 15 015 beschreibt eine Hülle der eingangs genannten Art. Hierbei kann über das offene Ende der am Gegenstand angebrachten Hülle eine Kappe gleichen Materials gezogen werden und an der Hülle mittels Klettverschlüssen oder dgl. befestigt werden.

Bei einer vorteilhaften Ausgestaltung der erfindungsgemäßen sackförmigen Hülle ist der wannenförmige untere Teil aus einem einzelnen Bodenteil und vier einzelnen Seitenteilen zusammengenäht. Dieses gibt dem unteren wannenförmigen Teil nicht nur eine höhere Steifigkeit, sondern es wird auch die Herstellung der sackförmigen Hülle erleichtert.

Das obere Ende der sackförmigen Hülle ist durch eine Kordel verschlossen. Dazu ist der obere Rand des oberen Teils umgeschlagen, das freie Ende des umgeschlagenen Randes angenäht und in den so gebildeten Schlauch die Kordel eingezogen. Da sich jedoch das obere Ende nicht soweit zusammenraffen läßt, daß die sackförmige Hülle oben völlig verschlossen ist, wird das mit der Kordel zusammengeraffte Ende mit einer Klappe aus dem dünneren Textil verschlossen, die an einer Randseite an den oberen Teil angenäht und mit der gegenüberliegenden Randseite lösbar, z. B. durch Knöpfe, Klettverschluß, mit dem oberen Teil verbunden ist.

Der obere und der untere Teil der sackförmigen Hülle sind zusammengenäht. Das Zusammennähen des oberen und unteren Teils und/oder der Einzelteile des unteren Teils erfolgt so, daß die mit den Rändern zusammengenähten Teile so überlappen, daß ihre Kanten eine gemeinsame Kante bilden und die Kanten der zusammengenähten Ränder paspeliert sind. Dadurch sind die Kanten gegen Ausfransen geschützt.

Bei einer anderen Ausführungsform ist in die aus dickerem und gröberem Textil bestehende Außenschicht des unteren Teils eine mehrschichtige Wanne eingesetzt, welche aus mindestens einem dünneren und feineren Textil und einem Vlies besteht und die lösbar befestigt in den unteren Teil eingesetzt ist. Dieses hat den Vorteil, daß zum Reinigen der sackförmigen Hülle das Vlies aus dem Unterteil herausgenommen werden kann und sich somit die Reinigung wesentlich einfacher gestaltet. Dabei ist es vorteilhaft, wenn die mehrschichtige Wanne außen und innen aus einem dünneren und feineren Textil besteht, welches das Vlies umhüllt. Dabei sind die Umhüllungen der vier Seitenteile des unteren Teils untereinander und mit der Umhüllung des Bodenteils zu einer Wanne vernäht. Die lösbare Befestigung der Wanne mit dem dickeren und gröberen Textil des Unterteils erfolgt durch einen Knopf-, Klett- oder einen ähnlichen lösbaren Verschluß.

Weiterhin ist es vorteilhaft, das dünnere und feinere Textil als Dünnleinen und das dickere und gröbere Textil als Dickleinen sowie das Vlies als Flachsvlies auszuführen. Dadurch ergibt sich der Vorteil, daß die gesamte sackförmige Hülle nach einem oftmaligen Gebrauch leicht und umweltfreundlich entsorgt werden kann. Das Flachsvlies gibt dem unteren wannenförmigen Teil eine ausreichende Polsterung und Steifigkeit und läßt es trotzdem noch zu, daß der wannenförmige Teil für die Rücksendung zur abermaligen Benutzung nach Aufnahme des oberen Teils durch Aufrollen gebündelt werden kann.

Damit das Flachsvlies eine ausreichende Polsterung und Steifigkeit erbringt, wird ein solches von 800 - 3 200 g/qm verwendet. Ein höherer Wert wird immer dann gewählt, wenn die Polsterung und Steifigkeit groß sein soll.

Als Dickleinen für den wannenförmigen unteren Teil wird ein solches von 500 - 1 200 g/qm und als Dünnleinen ein solches von 200 - 300 g/qm verwendet. Ein oberer Wert wird immer dann genommen, wenn die sackförmige Hülle eine höhere Lebensdauer haben soll.

Nach einem weiteren Merkmal der Erfindung sind außen an dem oberen Teil Taschen zur Aufnahme von Begleitpapieren aufgenäht, wobei mindestens eine Tasche aus Klarsichtmaterial besteht. Damit sind die Begleitpapiere, ohne daß diese aus der Tasche herausgenommen werden müssen, von außen lesbar. Solche Begleitpapiere können als elektronische Kennkarte ausgebildet sein, so daß der Weg der oftmals zu benutzenden sackförmigen Hüllen leicht verfolgt werden kann.

Weiterhin ist es vorteilhaft, außen an den unteren Teil Grifflaschen anzunähen, um das von der sackförmigen Hülle aufgenommene Möbelstück leichter transportieren zu können.

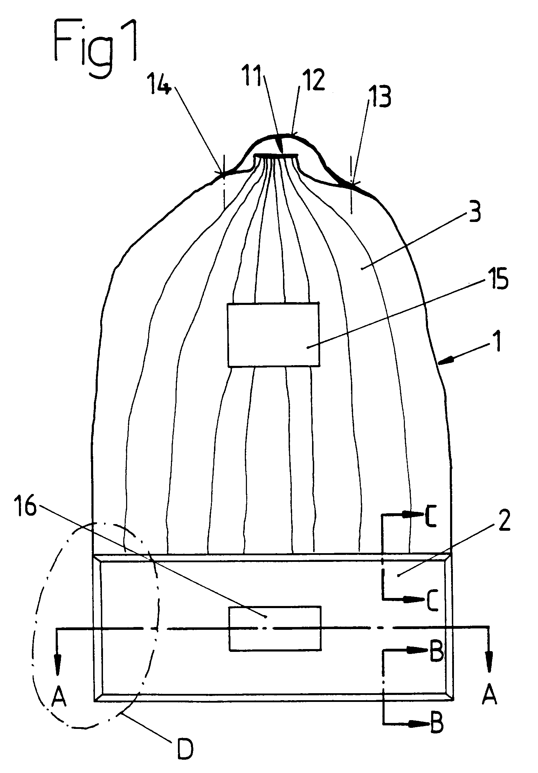

Die Zeichnung veranschaulicht zwei Ausführungsbeispiele der Erfindung, und zwar zeigen
- Figur 1: die sackförmige Umhüllung aus der Seitenansicht,

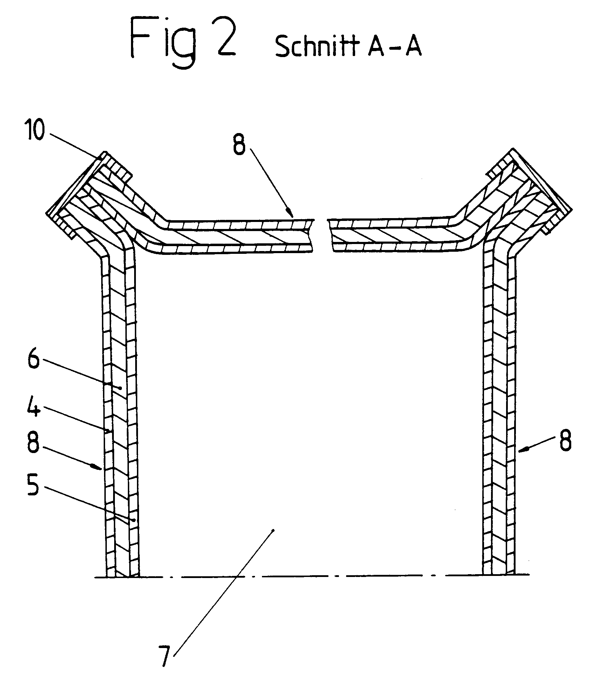

- Figur 2: einen Halbschnitt nach der Linie A-A,

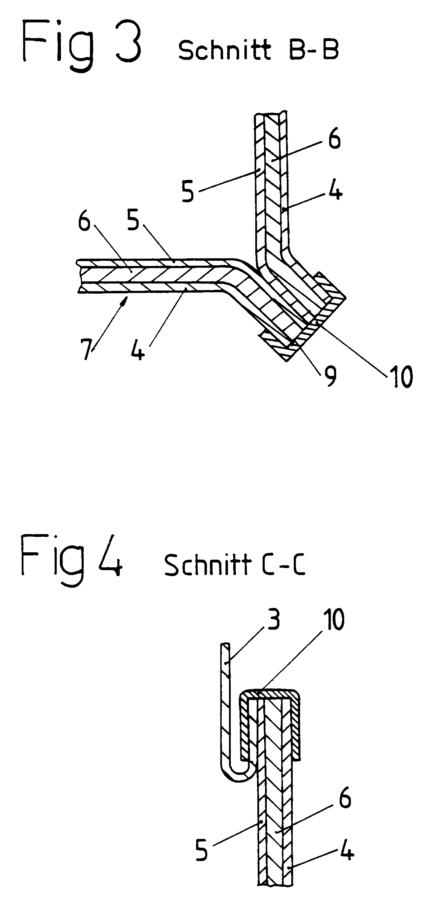

- Figur 3: einen Teilschnitt nach der Linie B-B,
- Figur 4: einen Teilschnitt nach der Linie C-C und
- Figur 5: einen Schnitt der Einzelheit D einer anderen Ausführungsform.

Die sackförmige Hülle (1) besteht aus einem wannenförmigen unteren Teil (2) und einem oberen Teil (3). Der untere Teil (2) ist dreischichtig aufgebaut, wobei die äußere Schicht aus einem dickeren und gröberen Textil (4), die innere Schicht aus einem dünneren und feineren Textil (5) und die mittlere Schicht aus einem Vlies (6) besteht. Hierzu wird Grobleinen, Feinleinen bzw. Flachsvlies verwendet. Der wannenförmige untere Teil ist aus mehreren Einzelteilen, nämlich der Bodenfläche (7) und den vier Seitenflächen (8) zusammengenäht. Zum Zusammennähen werden die zu verbindenden Ränder der Einzelteile (7, 8) so aufeinandergelegt, daß ihre Kanten (9) eine gemeinsame Kante bilden. Anschließend werden die zusammengenähten Ränder mit einer Paspelierung versehen.

Der untere und obere Teil (2 und 3) der sackförmigen Hülle (1) werden ebenfalls zusammengenäht. Dabei werden der untere Rand des oberen Teils (3) und der obere Rand des unteren Teils (2) ebenfalls so übereinandergelegt, daß ihre Kanten eine gemeinsame Kante bilden. Auch diese Ränder werden mit einer Paspelierung (10) versehen. Der obere Teil (3) der sackförmigen Hülle (1) wird aus vier rechteckigen Leinentüchern zusammengenäht und am oberen Ende mit einer Kordel zum Verschließen zusammengezogen. Da durch die Anhäufung des gerafften Materials bei (11) eine Öffnung verbleibt, wird diese durch eine Klappe (12) verschlossen. Diese Klappe (12) ist auf der einen Seite (13) mit dem oberen Teil (3) vernäht, während sie auf der gegenüberliegenden Seite (14) oder auch an den übrigen Rändern, z. B. durch Druckknöpfe, Knöpfe oder durch einen Klettverschluß, lösbar mit dem oberen Teil (3) verbunden sind.

Die sackförmige Hülle ist außen durch Aufnähen eines Lappens mit einer Tasche (15) zur Aufnahme von Begleitpapieren versehen. Eine andere Tasche (16), die vorzugsweise auf dem unteren Teil (2) aufgebracht ist, ist aus Klarsichtmaterial hergestellt, so daß zumindest ein Teil der Begleitpapiere von außen sichtbar ist, ohne daß diese aus der Tasche entnommen werden müssen.

Da die erfindungsgemäße sackförmige Hülle oftmalig benutzt werden kann und um dabei den Weg der sackförmigen Hülle, für den Fall, daß diese als Leihgut ausgegeben wird, nachvollziehen zu können, ist eine elektronische Kennkarte in oder an der Hülle angebracht.

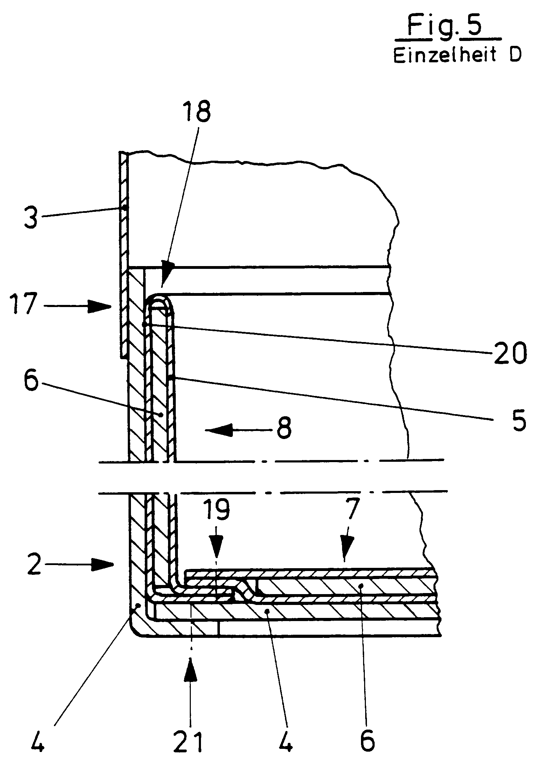

In Figur 5 ist eine andere Ausführungsform des unteren Teils (2) der sackförmigen Hülle dargestellt. Hierbei ist der untere Teil (2) mit dem oberen Teil (3) (bei 17) vernäht. Dabei ist der obere Teil (3) mit der aus dem dickeren und gröberen Textil (4) bestehenden Außenschicht des unteren Teils (2) (bei 17) vernäht. In diese äußere Schicht des unteren Teil (2) ist eine Wanne (18) eingesetzt, die aus dem Bodenteil (7) und vier Seitenteilen (8) besteht. Das Bodenteil (7) und die Seitenteile (8) sind so hergestellt, daß das Vlies (6) von dem dünneren und feineren Textil (5) umhüllt ist und die Umhüllungen der Seitenteile (6) untereinander und (bei 19) mit der Umhüllung des Bodenteils (7) miteinander vernäht sind. Die Wanne (18) ist (bei 20) lösbar, z. B. durch Klett- oder Knopfverschluß, mit der Außenschicht des unteren Teils verbunden, so daß die Wanne zum Reinigen der Umhüllung herausnehmbar ist.

Die aus dem dickeren und gröberen Textil (4) bestehende Außenschicht des unteren Teils (2) ist ebenfalls aus vier Seitenflächen und einer Bodenfläche, die (bei 21) mit den Seitenflächen vernäht ist, zusammengesetzt.

## Patentansprüche

1. Sackförmige Hülle für den Transportschutz von Möbeln und ähnlichen sperrigen Gütern, bestehend aus einem unteren und einem sich daran anschließenden oberen Teil aus Textil, dadurch gekennzeichnet, daß sie aus einem steiferen, mehrlagigen, wannenförmigen unteren Teil (2) und einem weicheren, oberen Teil (3) hergestellt ist, wobei die Außenschicht des wannenförmigen unteren Teils (2) aus einem dickeren und gröberen Textil (4), die Innenschicht aus einem dünneren und feineren Textil (5), mindestens eine der mittleren Schichten aus einem Vlies (6) und der obere Teil (3) aus einem dünneren und feineren Textil besteht.

2. Sackförmige Hülle nach Anspruch 1, dadurch gekennzeichnet, daß das wannenförmige untere Teil (2) aus Einzelteilen hergestellt und zusammengenäht ist, so daß es ein Bodenteil (7) und vier Seitenteile (8) umfaßt.

3. Sackförmige Hülle nach Anspruch 2, dadurch gekennzeichnet, daß der obere Teil (3) aus vier Rechteckflächen zusammengenäht ist.

4. Sackförmige Hülle nach einem der vorstehenden Ansprüche, dadurch gekennzeichnet, daß der obere Rand des oberen Teils (3) umgeschlagen, das freie Ende des umgeschlagenen Randes angenäht und in den so gebildeten Schlauch eine Kordel eingezogen ist.

5. Sackförmige Hülle nach einem der vorstehenden Ansprüche, dadurch gekennzeichnet, daß der obere (3) und der untere Teil (2) zusammengenäht sind.

6. Sackförmige Hülle nach einem der vorstehenden Ansprüche, dadurch gekennzeichnet, daß die mit den Rändern zusammengenähten Einzelteile so überlappen, daß ihre Kanten eine gemeinsame Kante (9) bilden.

7. Sackförmige Hülle nach Anspruch 6, dadurch gekennzeichnet, daß die Kanten der zusammengenähten Ränder der Einzelteile paspeliert sind.

8. Sackförmige Hülle nach einem der vorstehenden Ansprüche, dadurch gekennzeichnet, daß der mehrlagige, wannenförmige untere Teil (2) eine Außenschicht aus dem dickeren und gröberen Textil (4) aufweist, die mit dem oberen Teil (3) vernäht ist und in die eine mehrschichtige Wanne (18) bestehend aus mindestens einem dünneren und feineren Textil (5) und einem Vlies (6) lösbar befestigt eingesetzt ist.

9. Sackförmige Hülle nach Anspruch 8, dadurch gekennzeichnet, daß die mehrschichtige Wanne (18) außen und innen aus einem dünneren und feineren Textil (5) und ihre mittlere Schicht aus einem Vlies (6) besteht.

10. Sackförmige Hülle nach Anspruch 2 und 9, dadurch gekennzeichnet, daß das Vlies (6) von dem dünneren und feineren Textil (5) umhüllt ist und die Umhüllungen der vier Seitenteile (8) des unteren Teils (2) untereinander und mit der Umhüllung des Bodenteils (7) zu einer Wanne (18) vernäht sind.

11. Sackförmige Hülle nach einem der Ansprüche 8 bis 10, dadurch gekennzeichnet, daß die Wanne (18) mit einem Klett-, Knopf- oder ähnlichen Verschluß mit dem dickeren und gröberen Textil (4) des unteren Teils (2) lösbar verbunden ist.

12. Sackförmige Hülle nach einem der vorstehenden Ansprüche, dadurch gekennzeichnet, daß das dünnere und feinere Textil (5) ein Dünnleinen und das dickere und gröbere Textil (4) ein Dickleinen ist.

13. Sackförmige Hülle nach einem der vorstehenden Ansprüche, dadurch gekennzeichnet, daß als Vlies (6) ein Flachsvlies verwendet ist.

14. Sackförmige Hülle nach Anspruch 13, dadurch gekennzeichnet, daß ein Flachsvlies von 800 - 3 200 g/qm verwendet ist.

15. Sackförmige Hülle nach Anspruch 12, dadurch gekennzeichnet, daß als Dickleinen (4) für den wannenförmigen unteren Teil (2) ein Leinen von 500 - 1 200 g/qm verwendet ist.

16. Sackförmige Hülle nach Anspruch 12, dadurch gekennzeichnet, daß als Dünnleinen (5) ein Leinen von 200 - 300 g/qm verwendet ist.

17. Sackförmige Hülle nach Anspruch 4, dadurch gekennzeichnet, daß das mit der Kordel zusammengeraffte Ende mit einer Klappe (12) aus Dünnleinen verschlossen ist, die an einer Randseite an dem oberen Teil (3) angenäht (bei 13) und mit der gegenüberliegenden Randseite (bei 14) lösbar, z. B. durch Knöpfe, Klettverschluß, mit dem oberen Teil (3) verbunden ist.

18. Sackförmige Hülle nach einem der vorstehenden Ansprüche, dadurch gekennzeichnet, daß außen an dem oberen Teil (3) Taschen (15) zur Aufnahme von Begleitpapieren aufgenäht sind.

19. Sackförmige Hülle nach Anspruch 18, dadurch gekennzeichnet, daß mindestens eine der Taschen aus Klarsichtmaterial besteht.

20. Sackförmige Hülle nach einem der vorstehenden Ansprüche, dadurch gekennzeichnet, daß eine elektronische Kennkarte eingebracht ist.

21. Sackförmige Hülle nach einem der vorstehenden Ansprüche, dadurch gekennzeichnet, daß außen an dem unteren Teil (2) Grifflaschen angebracht sind.

## Claims

1. A sack-shaped covering for the protection during transport of items of furniture and similar bulky goods, consisting of a lower part and an adjoining upper part, the parts being made of textile, characterised in that it is manufactured from a stiffer, multi-layered, trough-shaped lower part (2) and a softer upper part (3), wherein the outer layer of the trough-shaped lower part (2) consists of a thicker and coarser textile (4), the inner layer consists of a thinner and finer textile (5), at least one of the middle layers consists of a felt (6), and the upper part (3) consists of a thinner and finer textile.

2. A sack-shaped covering according to claim 1, characterised in that the trough-shaped lower part (2) is manufactured from separate parts and is sewn together so that it comprises a bottom part (7) and four side parts (8).

3. A sack-shaped covering according to claim 2, characterised in that the upper part (3) is sewn together from four rectangular sheets.

4. A sack-shaped covering according to any one of the preceding claims, characterised in that the upper edge of the upper part (3) is turned down, the free end of the turned down edge is sewn on, and a cord is drawn into the tube thus formed.

5. A sack-shaped covering according to any one of the preceding claims, characterised in that the upper part (3) and the lower part (2) are sewn together.

6. A sack-shaped covering according to any one of the preceding claims, characterised in that the separate parts which are sewn together at their edges overlap so that their borders form a common border (9).

7. A sack-shaped covering according to claim 6, characterised in that the borders of the sewn-together edges of the separate parts are trimmed with piping.

8. A sack-shaped covering according to any one of the preceding claims, characterised in that the multi-layered, trough-shaped lower part (2) comprises an outer layer of the thicker and coarser textile (4) which is sewn to the upper part (3) and in which a multi-layer trough (18) consisting of at least one thinner and finer textile (5) and a felt (6) is inserted and is detachably fastened.

9. A sack-shaped covering according to claim 8, characterised in that the multi-layer trough (18) consists of a thinner and finer textile (5) on the outside and the inside, and its middle layer consists of a felt (6).

10. A sack-shaped covering according to claims 2 and 9, characterised in that the felt (6) is covered by the thinner and finer textile (5) and the coverings of the four side parts (8) of the lower part (2) are sewn to each other and to the covering of the bottom part (7) to form a trough (18).

11. A sack-shaped covering according to any one of claims 8 to 10, characterised in that the trough (18) is detachably joined to the thicker and coarser textile (4) of the lower part (2) by a burred closure, a button closure or a similar closure.

12. A sack-shaped covering according to any one of the preceding claims, characterised in that the thinner and finer textile (5) is a thin linen and the thicker and coarser textile (4) is a thick linen.

13. A sack-shaped covering according to any one of the preceding claims, characterised in that a flax felt is used as the felt (6).

14. A sack-shaped covering according to claim 13, characterised in that a flax felt of 800 - 3200 g/m² is used.

15. A sack-shaped covering according to claim 12, characterised in that a linen of 500 - 1200 g/m² is used as the thick linen (4) for the trough-shaped lower part (2).

16. A sack-shaped covering according to claim 12, characterised in that a linen of 200 - 300 g/m² is used as the thin linen (5).

17. A sack-shaped covering according to claim 4, characterised in that the end which is gathered together with the cord is closed with a flap (12) of thin linen, one edge side of which is sewn (at 13) to the upper part (3), and the opposite edge side of which is detachably joined (at 14), e.g. by buttons or a burred closure, to the upper part (3).

18. A sack-shaped covering according to any one of the preceding claims, characterised in that pockets (15) for receiving accompanying papers are sewn on to the outside of the upper part (3).

19. A sack-shaped covering according to claim 18, characterised in that at least one of the pockets consists of transparent material.

20. A sack-shaped covering according to any one of the preceding claims, characterised in that an electronic identification card is incorporated.

21. A sack-shaped covering according to any one of the preceding claims, characterised in that handling straps are provided on the outside of the lower part (2).

## Revendications

1. Enveloppe en forme de sac pour la protection de transport de meubles et de marchandises encombrantes similaires, constituée par une partie inférieure en textile et par une partie supérieure en textile qui s'y raccorde, caractérisée en ce qu'elle est réalisée par une partie inférieure plus rigide, à plusieurs couches et en forme de cuvette (2), et par une partie supérieure plus souple (3), la couche extérieure de la partie inférieure en forme de cuvette (2) étant constituée en un textile plus épais et plus grossier (4), la couche intérieure étant constituée en un textile plus mince et plus fin (5), l'une au moins des couches médianes étant constituée par une nappe (6) et la partie supérieure (3) en un textile plus mince et plus fin.

2. Enveloppe en forme de sac selon la revendication 1, caractérisée en ce que la partie inférieure en forme de cuvette (2) est réalisée par des parties individuelles et en ce qu'elle est cousue, de sorte qu'elle comprend une partie de fond (7) et quatre parties latérales (8).

3. Enveloppe en forme de sac selon la revendication 2, caractérisée en ce que la partie supérieure (3) est cousue par quatre surfaces rectangulaires.

4. Enveloppe en forme de sac selon l'une quelconque des revendications précédentes, caractérisée en ce que la bordure supérieure de la partie supérieure (3) est rabattue, en ce que l'extrémité libre de la bordure rabattue est cousue, et en ce qu'une corde est enfilée dans le tuyau ainsi formé.

5. Enveloppe en forme de sac selon l'une quelconque des revendications précédentes, caractérisée en ce que la partie supérieure (3) et la partie inférieure (2) sont cousues ensemble.

6. Enveloppe en forme de sac selon l'une quelconque des revendications précédentes, caractérisée en ce que les parties individuelles cousues avec les bordures se chevauchent de telle sorte que leurs arêtes forment une arête commune (9).

7. Enveloppe en forme de sac selon la revendication 6, caractérisé en ce que les arêtes des bordures cousues des parties individuelles sont attachées en passepoil.

8. Enveloppe en forme de sac selon l'une quelconque des revendications précédentes, caractérisée en ce que la partie inférieure en forme de cuvette et à plusieurs couches (2) présente une couche extérieure en textile plus épais et plus grossier (4), qui est cousue avec la partie supérieure (3) et dans laquelle est fixée de façon détachable une cuvette à plusieurs couches (18) constituée par au moins un textile plus mince et plus fin (5) et par une nappe (6).

9. Enveloppe en forme de sac selon la revendication 8, caractérisée en ce que la cuvette à plusieurs couches (18) est constituée à l'extérieur et à l'intérieur par un textile plus mince et plus fin (5) et en ce que sa couche médiane est constituée par une nappe (6).

10. Enveloppe en forme de sac selon l'une des revendications 2 et 9, caractérisée en ce que la nappe (6) est entourée par le textile plus mince et plus fin (5), et en ce que les entourages des quatre parties latérales (8) de la partie inférieure (2) sont cousus les uns avec les autres et avec l'entourage de la partie de fond (7), pour former une cuvette (18).

11. Enveloppe en forme de sac selon l'une quelconque des revendications 8 à 10, caractérisée en ce que la cuvette (18) est reliée de façon détachable au textile plus épais et plus grossier (4) de la partie inférieure (2), par exemple par une fermeture à crochets et bouclettes, à boutons, ou similaires.

12. Enveloppe en forme de sac selon l'une quelconque des revendications précédentes, caractérisée en ce que le textile plus mince et plus fin (5) est un lin mince, et en ce que le textile plus épais et plus grossier (4) est un lin épais.

13. Enveloppe en forme de sac selon l'une quelconque des revendications précédentes, caractérisée en ce que l'on utilise comme nappe (6) une nappe en lin écru.

14. Enveloppe en forme de sac selon la revendication 13, caractérisée en ce que l'on utilise une nappe en lin écru de 800 à 3200 g/m².

15. Enveloppe en forme de sac selon la revendication 12, caractérisée en ce que l'on utilise comme lin épais (4) pour la partie inférieure en forme de cuvette (2) un lin de 500 à 1200 g/m².

16. Enveloppe en forme de sac selon la revendication 12, caractérisée en ce que l'on utilise comme lin mince (5) un lin de 200 à 300 g/m².

17. Enveloppe en forme de sac selon la revendication 4, caractérisée en ce que l'extrémité resserrée avec la corde est refermée par un volet (12) en lin mince, qui est cousu sur un côté marginal sur la partie supérieure (3) (à l'emplacement 13), et en ce qu'elle est reliée de façon détachable sur le côté marginal opposé (à l'emplacement 14) à la partie supérieure (3), par exemple par des boutons, une fermeture à crochets et bouclettes.

18. Enveloppe en forme de sac selon l'une quelconque des revendications précédentes, caractérisée en ce que des poches (15) sont cousues à l'extérieur sur la partie supérieure (3), pour recevoir des documents d'accompagnement.

19. Enveloppe en forme de sac selon la revendication 18, caractérisée en ce qu'au moins l'une des poches est constituée en une matière transparente.

20. Enveloppe en forme de sac selon l'une quelconque des revendications précédentes, caractérisée en ce qu'il est prévue une carte d'identification électronique.

21. Enveloppe en forme de sac selon l'une quelconque des revendications précédentes, caractérisée en ce qu'il est prévu des pattes de saisie à l'extérieur sur la partie inférieure (2).
